# EUROPÄISCHE PATENTANMELDUNG

(11) **EP 3 919 322 A1**
(43) Veröffentlichungstag der Anmeldung: **08.12.2021**
(21) Anmeldenummer: 20178397.4
(22) Anmeldetag: 05.06.2020
(51) Int. Cl.: B60P 1/64

(54) **ÜBERGABESYSTEM UND VERFAHREN ZUR ÜBERGABE VON TRÄGERN ODER BEHÄLTERN**

(71) Anmelder: Anronaut GmbH, 8112 Otelfingen (CH)
(72) Erfinder: Michel, Thomas, 8006 Zürich (CH)
(74) Vertreter: Hepp Wenger Ryffel AG

(57) **Zusammenfassung**

Die Erfindung betrifft ein Übergabesystem (1) zur Übergabe von Trägern oder Behältern (34), bevorzugt für eine Lagereinrichtung. Das Übergabesystem (1) weist eine Übergabeeinheit (30) auf, welche die Träger oder Behälter (34) von einer Aufnahmestelle (91) zu einer Übergabestelle (31) bewegt. Das Übergabesystem (1) verfügt über ein Transportfahrzeug (10), welches in einer Richtung (21) verfahrbar ist und die Übergabeeinheit (30) transportiert. Die Übergabeeinheit (30) ist antriebslos ausgebildet und wird von einem teleskopischen Riemensystem (71) in einer Querrichtung (20) quer zur Transportrichtung (21) bewegt.

## Beschreibung

Die Erfindung betrifft ein Übergabesystem und ein Verfahren zur Übergabe von Trägern oder Behältern mit den Merkmalen der Oberbegriffe der unabhängigen Ansprüche.

In Lagereinrichtungen werden bevorzugt automatisierte Lagersysteme eingesetzt, um die Transportsicherheit von Gütern zu erhöhen und Prozesse zu beschleunigen. Aus lagertechnischen Gründen werden bevorzugt genormte Träger oder Behälter für den Transport und die Lagerung von Gütern verwendet. Hierfür existieren verschiedene Ausführungsformen von Trägern oder Behältern. Einer der bekanntesten Träger ist die Europalette.

Mit Hilfe der Europoolpalette werden Güter transportsicher bewegt und in Lagereinrichtungen zwischengelagert. Um den Lagerraum in den Lagereinrichtungen gut zu nutzen, werden bevorzugt Hochregallagersysteme eingesetzt. Hochregellagersysteme sind teilweise automatisiert und verfügen über verschiedene Teilsysteme. Zwischen den Teilsystemen bilden sich Schnittstellen, wo bevorzugt ein Zusammenspiel zwischen Mensch und Maschine gefordert wird. So werden beispielsweise Güter auf Trägern oder Behältern mittels Lastkraftwagen transportiert und danach in den Lagersystemen zwischengelagert. Mit Hilfe eines Hubstaplers können die Träger oder Behälter an ein Übergabesystem übergeben werden, um automatisch in die Hochregallagersysteme eingelagert zu werden.

Es gibt Übergabesysteme, welche für verschiedene Lagersysteme eingesetzt werden. Bei einer Übergabe der Träger oder Behälter werden in den Systemen fahrbare Transportfahrzeuge verwendet. Bei der Übergabe mittels Schwenkschubgabeln oder teleskopisch ausfahrbaren Tragarmen entstehen hohe Kippmomente. Entsprechend muss ein Transportfahrzeug ein relativ hohes Gewicht und/oder eine ausreichende Breite aufweisen, um ein Kippen zu vermeiden. Es ist auch bekannt, Behälter direkt auf einen Aufnahmetisch zu übergeben, der mit Rollen versehen ist, um die Behälter aufnehmen zu können. Dies bedingt auf Seiten des Aufnahmetisches einen erhöhten konstruktiven Aufwand, insbesondere wenn aktiv betriebene Komponenten auf dem Tisch erforderlich sind.

DE 10 2010 005 591 offenbart verschiedene Ausführungsformen eines Hochregallagersystems. Die verschiedenen Ausführungsformen verfügen über ein Schienensystem, welches mit einem Kanal- und Gangwagen befahrbar ist. Hierbei bildet der Kanal- und Gangwagen einen Tandemshuttle. Für die Bewegung in der Höhe werden Vertikaltransporteinrichtungen eingesetzt. Sowohl der Kanal- als auch der Gangwagen sind mit Rädern auf dem Schienensystem fahrbar ausgestattet. Die Fahrtrichtungen des Kanal- und Gangwagens sind senkrecht zueinander ausgerichtet. Die Bewegung im Gang wird bevorzugt vom Gangwagen huckepack mit dem Kanalwagen ausgeführt. Dabei ist der Kanalwagen im Kanal verfahrbar und verfügt über eine Hubeinrichtung. Mit der Hubeinrichtung kann ein Hubblech in vertikaler Richtung angehoben und abgesenkt werden, damit beispielsweise Paletten von Lagerplätzen aufgenommen und abgestellt werden können.

DE 102 27 263 offenbart einen Ladewagen zum Verladen einer Ladung von einer Bereitstellungszone zu einer Zielzone. Der Ladewagen kommt in Güterumschlagssystemen zum Einsatz und ist auf Schienen in einer Fahrtrichtung hin und her verfahrbar. Der Ladewagen weist ein, in einer quer zur Fahrtrichtung liegendes, ein- und ausfahrbares Verlademittel auf. Das Verlademittel umfasst zusätzlich eine Tragfläche, welche anhebe- und absenkbar ist. Das Aus- und Einfahren des Verlademittels wird mit einem Riemen realisiert, wobei die Tragfläche auf Rollen und Skates verfahrbar ist. Das Aufheben und Absenken der Ladung wird mit einem aufblasbaren Schlauch, welcher sich in einem der Skates befindet, realisiert. Zusätzlich ist eine Förderkette dem Ladewagen angeordnet, mit welchem die Skates mittig unter einer Ladung verschiebbar sind.

Diese bekannten Systeme weisen aber verschiedene Nachteile auf. So weisen die fahrbaren Einheiten einen komplexen Aufbau auf.

Es ist daher Aufgabe der vorliegenden Erfindung, die Nachteile des Bekannten zu vermeiden, insbesondere eine Übergabeeinheit zur Verfügung zu stellen, welche einen einfachen Aufbau aufweist und welche Ein geringes Gewicht aufweist und platzsparend ist.

Erfindungsgemäss wird diese Aufgabe mit einem Übergabesystem und einem Verfahren mit den Merkmalen der unabhängigen Ansprüche gelöst. Ein Übergabesystem weist wenigstens ein insbesondere autonomes Transportfahrzeug und wenigstens einen Aufnahmeplatz zur Übergabe von Trägern oder Behältern auf. Das Transportfahrzeug ist mindestens in einer ersten Fahrtrichtung verfahrbar und umfasst eine Übergabestelle, an der der Träger oder Behälter anordenbar ist. Der Aufnahmeplatz umfasst eine Aufnahmestelle, auf welche der Träger oder Behälter übergebbar ist. Das Transportfahrzeug weist eine Übergabeeinheit mit einem Fahrwerk auf, welche in einer Querrichtung quer zur Fahrtrichtung des Transportfahrzeugs verfahrbar ist. Dabei ist die Übergabeeinheit auf einer Fahrbahn auf dem Transportfahrzeug und dem Aufnahmeplatz verfahrbar. Dadurch sind die Träger oder Behälter mit der Übergabeeinheit von der Aufnahmestelle zur Übergabestelle oder zurück bewegbar.

Das Transportfahrzeug weist ausserdem eine Antriebsanordnung für die Übergabeeinheit auf. Die Übergabeeinheit ist dabei mit der Antriebsanordnung derart gekoppelt, dass sie mittels der Antriebsanordnung in Querrichtung bewegbar ist. Aufgrund des auf der Fahrbahn sowohl des Transportfahrzeugs als auch des Aufnahmeplatzes fahrbaren Fahrwerks entstehen bei der Übergabe der Übergabeeinheit keine Kippmomente. Mit der Zuordnung des Antriebs zu dem Transportfahrzeug und des Fahrwerks zur Übergabeeinheit, lässt sich die Aufnahmestelle ohne angetriebene Teile konstruieren.

Das Transportfahrzeug ist bevorzugt ein modifiziertes ATF (Autonomes Transportfahrzeug). Das Transportfahrzeug kann bevorzugt automatisiert und autonom bewegbar sein. Die maximale Geschwindigkeit des Transportfahrzeugs beträgt bevorzugt 3 m/s. Eine Bedienung des Transportfahrzeugs kann optional auch manuell erfolgen. Hierfür ist eine Handbedienung vorgesehen, mit welcher das Transportfahrzeug bedient werden kann. Über eine Sensorik und Elektronik kann ein kontinuierlicher Austausch von Informationen während einer Bewegung sichergestellt werden. Die Informationen werden bevorzugt mittels eines Displays angezeigt.

Die Träger oder Behälter sind bevorzugt Normpaletten wie z.B. Europaletten. Denkbar sind auch Behälter, welche für den Transport von Liquiden zum Einsatz kommen. Es ist denkbar, dass das Übergabesystem für den Transport von verschiedenen Trägern oder Behältern anwendbar ist. So können kleinere und/oder grössere Güter auf Trägern oder in Behältern mit einem derartigen Übergabesystem transportiert werden. Das Transportfahrzeug ist bevorzugt mit mindestens drei Rädern entlang einer linearen Richtung fahrbar ausgebildet.

Das Transportfahrzeug ist bevorzugt autonom fahrbar und lenkbar. Ein Fahrweg des Transportfahrzeugs ist programmier- und steuerbar.

Die Übergabeeinheit ist bevorzugt mit der Antriebsanordnung derart gekoppelt, dass die Übergabeeinheit vertikal und/oder lateral zur Querrichtung beweglich ist. Dadurch ist ein Antrieb durch die Antriebsanordnung gewährt, selbst wenn die Übergabeeinheit bezogen auf die Aufnahmestelle versetzt ist oder Positionsabweichungen aufweist. Das Koppeln der Antriebsanordnung mit der Übergabeeinheit ist jederzeit möglich und erfolgt bevorzugt manuell.

Bevorzugt weist das Fahrwerk mindestens drei Räder, insbesondere Laufrollen auf. Die Anzahl der Räder (Laufrollen) ist beliebig ausweitbar. Somit kann bei höheren Belastungen der Träger oder Behälter das Gewicht auf mehr Räder verteilt werden.

Bevorzugt ist die Übergabeeinheit selbst antriebslos ausgebildet, d.h. nur über die dem Transportfahrzeug zugeordnete und mit der Übergabeeinheit gekoppelte Antriebsanordnung bewegbar. Damit kann das Eigengewicht gering und der Aufbau einfach gehalten werden. Es ist aber denkbar, Antriebsmittel für andere Zwecke vorzusehen, z.B. Hubeinheiten zur Übergabe der Behälter.

Bevorzugt weist die Antriebsanordnung ein Kettensystem oder ein Riemensystem auf. Das Riemensystem ist mit der Übergabeeinheit gekoppelt oder koppelbar. Das Riemensystem ist bevorzugt ein teleskopisches Riemensystem. Das teleskopische Riemensystem ist ausfahrbar und mit mindestens einem Riemen aufgebaut. Der Riemen ist bevorzugt ein Zahnriemen. Durch die Ausfahrbarkeit des Riemensystems wird ein kleiner Einbauraum für die Antriebsanordnung beansprucht. Eine Ausfahrlänge des Riemensystems ist beliebig wählbar Das Riemensystem kann bevorzugt in zwei Richtungen ausgefahren werden. Dies ermöglicht es, einen Träger oder Behälter von einer Aufnahmestelle beidseitig zu einer Übergabestelle zu übergeben.
Bevorzugt ist das Riemensystem in einer Ausfahrrichtung (Querrichtung) bis zur Aufnahmestelle ausfahrbar. Zwischen der Aufnahmestelle und der Übergabestelle ist insbesondere ein kleiner Spalt ausgebildet. Durch eine Mehrzahl von Laufrollen am Fahrwerk ist der Spalt überbrückbar.

Bevorzugt ist das Riemensystem und die Übergabeeinheit mechanisch oder elektrisch kuppelbar. Um die Übergabeeinheit zu bewegen, wird eine Verbindung zwischen der Übergabeeinheit und dem teleskopischen Riemensystem hergestellt. Damit wird die Übergabeeinheit mit den Träger oder Behälter zur Übergabestelle bewegt.

Das Übergabesystem umfasst bevorzugt eine Hubvorrichtung, mit welcher eine Höhe der Übergabeeinheit einstellbar ist, bevorzugt eine erste Exzenterhubvorrichtung. Damit eine Übergabe der Träger oder Behälter im Übergabesystem erfolgen kann, sollte die Übergabe möglichst auf gleichem Höhenniveau erfolgen. Ein Höhenunterschied zwischen Aufnahmestelle und Übergabestelle könnte die Übergabe erschweren. Es ist aber auch denkbar, bewusst ein Gefälle zwischen Übergabstelle und Aufnahmestelle vorzusehen. So kann beispielsweise ein minimaler Höhenunterschied zwischen der Hubvorrichtung und der Aufnahmestelle eingestellt werden, um den Ein- oder Ausschubwiderstand zu minimieren, sodass weniger Energie für die Übergabe aufgewendet werden muss.

Mit einer zweiten Exzenterhubvorrichtung kann ein Hubgerüst hochheb- und absenkbar sein, damit Träger oder Behälter übergeben werden können und von der Übergabevorrichtung aufnehm- und abgebbar sind. Mit der zweiten Exzenterhubvorrichtung können die Träger oder Behälter an der Aufnahmestelle angehoben oder abgesenkt und damit von der Übergabevorrichtung aufgenommen oder abgegeben werden. Bevorzugt werden die Träger und Behälter auf dem Aufnahmeplatz bereitgehalten und von der Übergabevorrichtung abgeholt. Das Anheben und Absenken erfolgt mit der zweiten Exzenterhubvorrichtung. Der Antrieb erfolgt mit einem Elektromotor. Hierbei erfolgt die Drehmomentübertragung beispielsweise mit einem Riemen- und einem Getriebesystem.

Bevorzugt weist das Übergabesystem eine Steuerung auf. Die Steuerung ist derart ausgebildet, dass eine laterale Bewegung, welche bei Betätigung durch die erste Exzenterhubvorrichtung verursacht wird, durch Bewegung der Übergabeeinheit in Querrichtung kompensierbar ist. Aufgrund der ersten Exzenterhubvorrichtung wird in Fahrtrichtung des Transportwagens oder der Übergabeeinheit eine laterale Bewegung hervorgerufen. Diese seitliche Bewegung wird durch die gesteuerte Bewegung der Übergabevorrichtung kompensiert.

Bevorzugt ist die Übergabeeinheit mit einem Kardangelenk mit der Antriebsordnung gekoppelt. Das Gelenk ist bevorzugt mit einem Riemen der Antriebsanordnung und durch eine lösbare Verbindung mit der Übergabeeinheit verbunden. Im Betrieb ist das Gelenkt kontinuierlich mit der Übergabeeinheit verbunden. Das Kardangelenk übernimmt eine Funktion ähnlich eines Kugelgelenks. Dadurch wird die Erzeugung von Kippmomenten über die Kupplung vermieden.

Die Übergabeeinheit kann von der Antriebseinheit zu Wartungszwecken getrennt werden. Die Verbindung kann automatisiert erfolgen und/oder elektrisch unterstützt sein.

Bevorzugt ist der Aufnahmeplatz als Tisch aufgebaut und unbeweglich angeordnet. Die Lage und Höhe der Aufnahmestelle sind bevorzugt definiert.

Das Übergabesystem weist bevorzugt mindestens einen Sensor auf. Mittels des Sensors ist ein Höhenunterschied zwischen Aufnahmestelle und der Übergabestelle ermittelbar. Hierbei weist das System eine Steuereinheit auf, mittels welcher die Hubvorrichtung derart betätigbar ist, dass der Höhenunterschied ausgleichbar ist.

Aufgrund des Sensors ist ein kontinuierliches Erfassen eines Höhenunterschieds zwischen der Aufnahme- und Übergabestelle und/oder der Position in Fahrtrichtung möglich. Hierbei wird eine Lage und Position der einzelnen Komponenten erfasst und einer Steuereinheit übermittelt.

Die Erfindung betrifft ausserdem ein Verfahren zur Übergabe von Trägern oder Behältern. Bevorzugt wird dabei ein Übergabesystem, wie vorstehend beschrieben, benutzt. Hierbei werden die Träger oder Behälter, bevorzugt mit einer Übergabeeinheit, wie vorstehend beschrieben, von der Aufnahmestelle zu der Übergabestelle oder zurück übergeben. Ein Höhenunterschied zwischen Übergabestelle und Aufnahmestelle kann ausgeglichen werden. Weiter könnten Träger oder Behälter auf der Übergabeeinheit mit einem Riemensystem, bevorzugt einem Riemensystem, wie vorstehend beschrieben, übergeben werden. Hierbei wird die Übergabeeinheit derart gestützt, dass kein Kippmoment durch das Gewicht der Übergabeeinheit mit Trägern oder Behältern bei der Übergabe an der Übergabestelle hervorgerufen wird.
Die Erfindung wird nachfolgend anhand der Figuren und Ausführungsbeispiele näher erläutert. Es zeigen:
- Figur 1:: Eine isometrische Ansicht eines Übergabesystems
- Figur 2a:: Eine Seitenansicht zum Zeitpunkt einer Übernahme von einem Übergabesystem in einer ersten Richtung
- Figur 2b:: Eine Seitenansicht zum Zeitpunkt der Übernahme eines Übergabesystems in einer zweiten Richtung
- Figur 3:: Eine isometrische Ansicht der Übergabeeinheit ohne Hubblech
- Figur 4:: Eine Detailansicht des Hubmechanismus und der Antriebseinheit
- Figur 5:: Eine Detailansicht eines Grundgerüsts
- Figur 6:: Eine Detailansicht der Antriebsanordnung

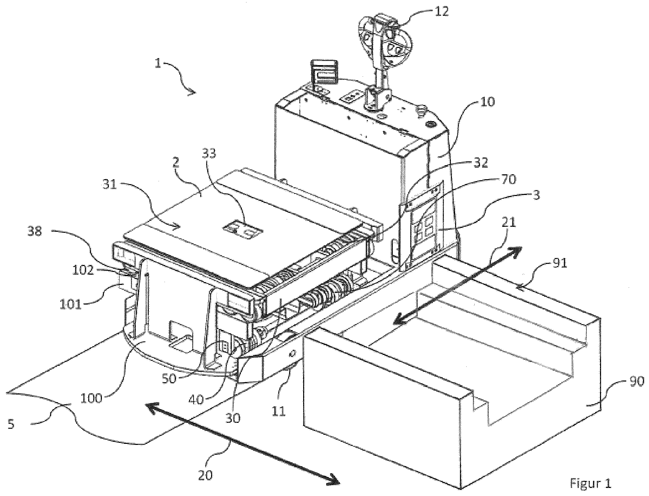

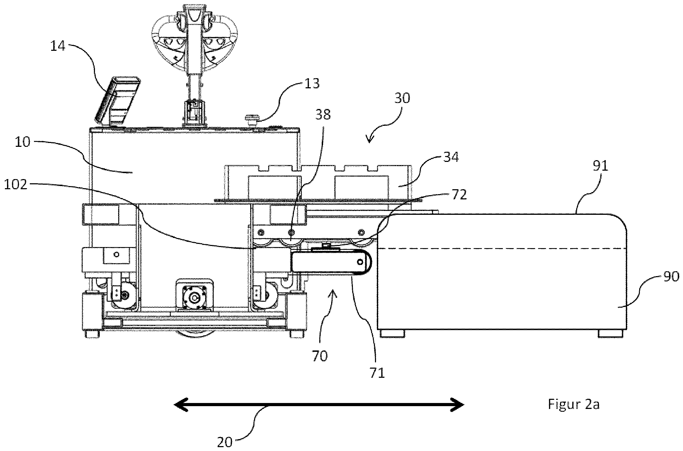

Die Figur 1 zeigt ein Übergabesystem 1. Das Übergabesystem 1 umfasst einen Aufnahmeplatz 90 und ein Transportfahrzeug 10. Auf dem Aufnahmeplatz 90 ist eine Aufnahmestelle 91 angeordnet. Der Aufnahmeplatz 90 und die Aufnahmestelle 91 sind an einer definierten Position angeordnet und in diesem Ausführungsbeispiel unbewegbar als Aufnahmetisch ausgebildet. An der Aufnahmestelle 91 ist eine Fahrbahn mit zwei voneinander beanstandeten Flächen gebildet. Zwischen diesen Flächen kann die Aufnahmestelle 91 vertieft ausgebildet sein (siehe Bereich unterhalb der gestrichelten Linie in Fig. 2a)), um ein Absenken einer Übergabeeinheit 30 mit einer Übergabestelle 31 und damit eine Übergabe eines Behälters von der Übergabestelle 31 auf die Aufnahmestelle 91 zu ermöglichen.

Von der Aufnahmestelle 91 können Träger oder Behälter in einem Hochregallager weiter verteilt werden. Das Transportfahrzeug 10 ist entlang eines Fahrwegs 5 fahrbar ausgebildet und auf Rädern 11 gestützt. Das Transportfahrzeug 10 ist programmierbar und in einer Fahrtrichtung 21 fahrbar. Das Transportfahrzeug 10 ist ein modifiziertes automatisches Transportfahrzeug. Das Transportfahrzeug 10 kann mit einer Handbedienung 12 steuerbar sein. Des Weiteren verfügt das Transportfahrzeug 10 über eine Steuereinheit 3. Über die Steuereinheit 3 werden die einzelnen Elemente gesteuert und überwacht.

Auf dem Transportfahrzeug 10 ist ein Grundgerüst 100 angeordnet. Das Grundgerüst 100 umfasst eine erste Exzenterhubvorrichtung 40, welche ein Anheben und Absenken einer Hubvorrichtung 50 ermöglicht. Mit Hilfe der ersten Exzenterhubvorrichtung 40 wird ein Höhenunterschied zwischen der einen Übergabeeinheit 30 und der Aufnahmestelle 91 eingestellt. An der Hubvorrichtung 50 ist eine Lastradauflage 101 angeordnet. Auf der Lastradauflage 101 sind Lastradflächen 102 ausgebildet, welche eine Fahrbahn definiert. Die Lastradflächen 102 sind so aufbereitet, dass vorteilhafte Reibungsbedingungen zwischen der Lastradfläche 102 und einem Laufrad 38 herrschen.

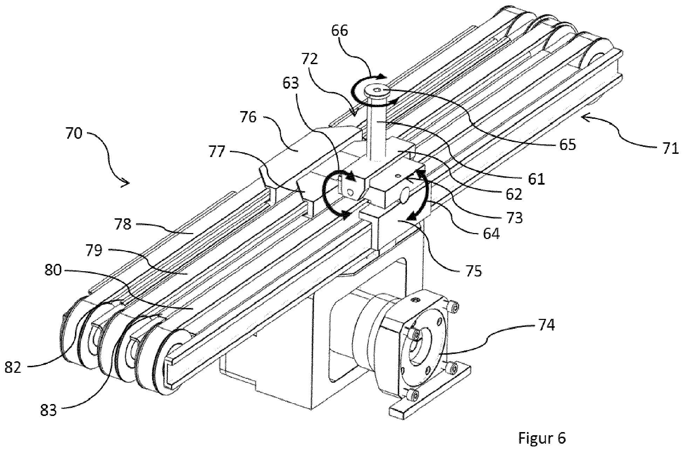

Auf der Laufradauflage 101 ist die Übergabeeinheit 30 angeordnet. Die Übergabeeinheit 30 ist mit Hilfe von Laufrädern 38 auf den Lastradflächen 102 in einer Querrichtung 20 fahrbar. Der Antrieb der Übergabeeinheit 30 erfolgt über eine Antriebsanordnung 70. Hierbei wird die Übergabeeinheit 30 lediglich geschoben oder gezogen. Das Gewicht der Übergabeeinheit 30 wird über die Laufräder 38 auf die Lastradauflage 101 übertragen. Eine Verbindung der Antriebsanordnung 70 und der Übergabeeinheit 30 (Siehe Fig. 2a) wird durch eine Kardan-Kupplung 72 (Siehe Figur 6) realisiert. Wie vorstehend beschrieben tritt bei der Übergabe durch das Abstützen der Laufräder 38 auf die Lastradauflage 101 kein Kippmoment an der Übergabestelle 31 auf, welches durch das Gewicht der Übergabeeinheit 30 und der Träger und Behälter 34 hervorgerufen würde.

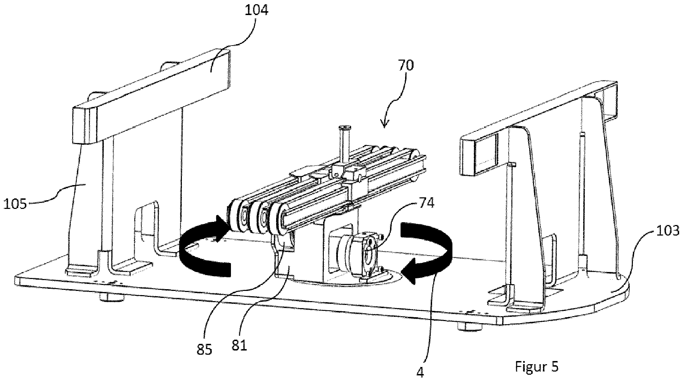

Die Übergabestelle 31, ist aus einem flachen Hubblech 2 gebildet. Bevorzugt wird das Hubblech 2 mit einem Laserschneid- und Schweissverfahren hergestellt. Die Übergabestelle 31 ist in der Höhe mittels einer zweiten Exzenter-Hubvorrichtung 32 anheb- und absenkbar. Durch das Anheben und Absenken der Übergabestelle 31 können Träger oder Behälter (nicht gezeigt) auf die Aufnahmestelle 91 übergeben werden. Für die Übergabe wird die Übergabeeinheit 30 unter dem Träger oder Behälter mit dem Hubblech 2 abgesenkt. Im Zentrum des Hubblechs 2 ist eine Kupplungsöffnung 33 angeordnet. Durch die Kupplungsöffnung 33 sind ein Koppeln und ein Entkoppeln der Übergabeeinheit 30 jederzeit gewährt. Durch die Öffnung ist auch der Zugang zur Kardan-Kupplung 72 jederzeit gewährleistet. Auf dem Grundgerüst 100 ist die Antriebsanordnung 70 um eine Achse senkrecht zur Grundplatte 103 drehbar angelagert (siehe Fig. 5).

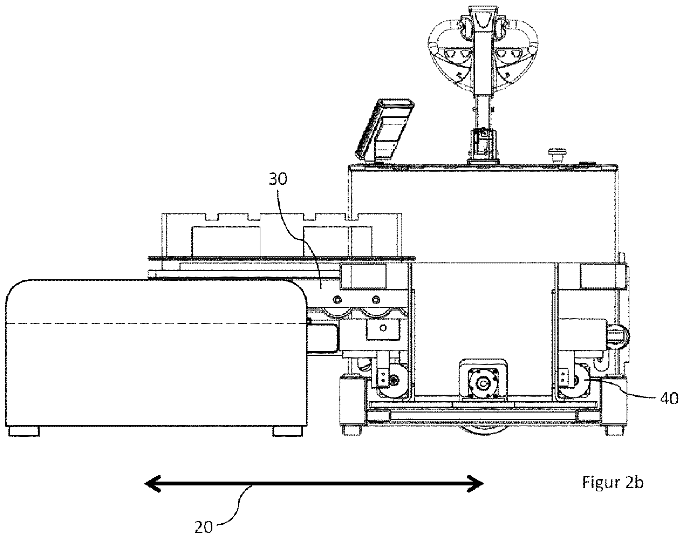

In Figur 2a und 2b sind Übernahmen von Trägern 37 oder Behältern in zwei verschiedenen Richtungen gezeigt. Dies kann vorteilhaft sein, wenn ein Lager auf beiden Seiten des Fahrwegs des Transportfahrzeugs 10 bedient werden soll. Mit der Antriebsanordnung 70 wird die Übergabeeinheit 30 auf dem Transportfahrzeug 10 in einer ersten Phase mit dem Träger 34 seitlich wegbewegt. In diesem Ausführungsbeispiel ist der Träger eine Europalette 34. Die Übergabeeinheit 30 wird mit einem teleskopischen Riemensystem 71 und einer Kardan-Kupplung 72 auf die Aufnahmestelle 91 geschoben. Sobald die Übergabeeinheit 30 zur Aufnahmestelle ausgerichtet ist, wird ein Hubblech 2 mit einer zweiten Exzenterhubvorrichtung 32 angehoben, sodass sich das Gewicht der Träger oder Behälter auf die Laufrollen 38 verteilt. Hierbei sind die Laufrollen 38 auf den Lastradfläche 102 gestützt. Das Riemensystem 71 schiebt die Europalette 34 von der Übergabestelle 31 zum Aufnahmeplatz 90. Sobald das teleskopische Riemensystem 71 ausgefahren ist und die Übergabeeinheit 30 die Endposition erreicht hat, kann die zweite Hubvorrichtung 32 abgesenkt werden. Damit wird die Europallette auf dem Aufnahmeplatz übergeben. Danach kann die Übergabeeinheit 30 zurückbewegt und das Transportfahrzeug 10 weiterbewegt werden. In diesem Ausführungsbeispiel verlaufen die zwei Bewegungsrichtungen 20 und 21 senkrecht zueinander.

Am Transportfahrzeug 10 ist ein Not-Aus-Knopf 13 angeordnet. Auch ist eine Anzeige in Form eines Displays 14 angeordnet, auf dem Informationen angezeigt werden.

In Figur 2b ist das Übergabesystem zum Zeitpunkt einer fortgesetzten Übergabe in einer zweiten Richtung gezeigt. Damit die Übergabe immer auf gleichem Niveau erfolgen kann, wird die Übergabeeinheit 30 mit der ersten Exzenterhubvorrichtung 40 auf ein bestimmtes Niveau angehoben oder abgesenkt. Das Niveau wird mittels eines Sensors ermittelt und einer Steuerungseinheit 3 (Figur 1) zugesandt. Die Steuerungseinheit 3 steht in Wirkverbindung mit der ersten Exzenterhubvorrichtung 40. Sobald ein Übergabeniveau erreicht worden ist, kann eine Übergabe erfolgen. Die Übergabe erfolgt analog Figur 2a. Die Europalette 34 wird bis zu einer definierten Endposition auf dem Aufnahmeplatz 90 geschoben und dann durch die Exzenter-Hubvorrichtung 32 abgesenkt. Hierbei ist die Abgabestelle derart ausgebildet, dass beim Absenken des Hubblechs 2 die Europalette 34 auf der Aufnahmestelle 91 aufliegt. Dabei liegt die Europalette 34 auf hervorgehobenen Aufnahmeflächen (nicht spezifisch bezeichnet) auf. Sobald die Europalette 34 abgesenkt wird und von den Aufnahmeflächen getragen wird, kann die Übergabevorrichtung 30 zurückgezogen werden. Das Bewegen der Palette 34 bzw. der Übergabeeinheit 30 erfolgt wieder mit der Antriebsanordnung 70.

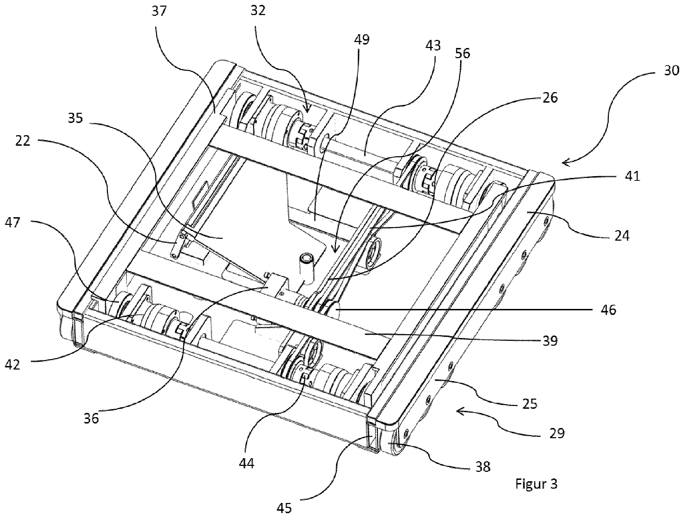

Die Figur 3 zeigt die Übergabeeinheit 30 im Detail und ohne Hubblech 2. Die Übergabeeinheit 30 besteht im Wesentlichen aus Profilen und Blechwerkstücken. Ein Grundrahmen 45 ist mit einem überhängenden Profil 24 und einer Blechvorrichtung 25 verbunden. An der Blechvorrichtung 25 sind die Laufrollen 38 angeordnet. Ein Fahrwerk 29 setzt sich aus dem Grundrahmen 45, den Laufrollen 38, dem überhängenden Profil 24 und der Blechvorrichtung 25 zusammen. Insgesamt verfügt die Übergabeeinheit 30 über zwölf Laufrollen 38, worauf sich das Gewicht der Europalette 34 verteilt. Im Innern der Übergabeeinheit 30 ist die zweite Exzenterhubvorrichtung 32 angeordnet. Der Aufbau der zweiten Exzenterhubvorrichtung 32 ähnelt dem Aufbau der ersten Exzenterhubvorrichtung 40. Der Antrieb erfolgt über einen Elektromotor 36. Hierbei ist der Elektromotor 36 an einer Motorhalterung 26 aufgehängt. Der Elektromotor 36 treibt zwei Antriebsritzel 46 an, welche über Riemen 41 ein Drehmoment auf Exzenterwellen 43 übertragen. Die Exzenterwellen 43 erstrecken sich über die Breite der Übergabeeinheit 30 und sind am Grundrahmen 45 gelagert. An den Enden der Exzenterwellen 43 sind flexible Kupplungen 44 angeordnet, welche das Drehmoment an ein Planetengetriebe 42 übertragen. Dadurch, dass die zweite Exzenterhubvorrichtung 32 über eine einzigen Antrieb verfügt und die Antriebselemente miteinander verbunden sind, kann das Hubblech 2 simultan durch Exzenterplatten 47 aufgehoben und abgesenkt werden. Dabei ist ein Hubgerüst 37 durch Exzenterbolzen (nicht gezeigt) mit der Exzenterwelle 43 derart verbunden, dass durch die Drehbewegung der Planetengetriebe 42 eine laterale Bewegung des Hubgerüsts 37 hervorgerufen wird. Das Hubgerüst 37 ist mit zwei Verstrebungsblechen 39 verstärkt, welche für zusätzliche Stabilität sorgen. Das Hubgerüst 37 besteht bevorzugt aus Blech und wird mit einem Laserschneid- und Schweissverfahren hergestellt. Auf einem Bodenblech 49 ist eine Durchführöffnung 56 angeordnet. Durch diese Durchführöffnung 56 kann die Kardan-Kupplung 72 (Siehe Figur 6) durchgeführt werden. Für die Verbindung zwischen dem teleskopischen Riemensystem 71 und der Übergabeeinheit 30 ist eine Kupplungsplatte 35 vorgesehen. Die Kupplungsplatte 35 ist auf dem Bodenblech 49 angeordnet und mit einem Gelenkhebel 22 gekoppelt.

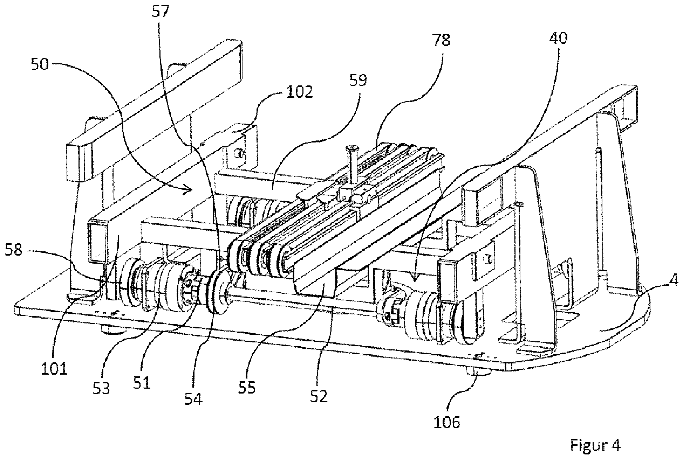

Ein Ausgleichen einer seitlichen Bewegung eines Kupplungselements des Riemenantriebs (siehe z. B. Schaft 61 in Figur 6) kann mithilfe der Kupplungsplatte 35 erfolgen. Die Kupplungsplatte 35 ist derart beweglich ausgebildet, dass seitliche Bewegungen aufnehmbar sind. Eine Verbindung zur Kardan-Kupplung 72 erfolgt durch eine Schraubenverbindung. Für diese Verbindung ist eine zylindrische Aufnahme an der Kupplungsplatte 35 vorgesehen. Die Verbindung wird mit einer Durchführung eines Schaftes (Siehe Figur 4) realisiert.

Die Figur 4 zeigt einen Aufbau der ersten Exzenterhubvorrichtung 40 und des Grundgerüsts 100 ohne das Transportfahrzeug 10 und die Übergabeeinheit 30. Der Aufbau des Grundgerüsts 100 basiert auf einer Grundplatte 4. Die Grundplatte 4 wird vom Transportfahrzeug 10 (siehe Figur 1) getragen und liegt auf vier Füssen 106 auf. Auf der Grundplatte 4 ist die erste Exzenterhubeinrichtung 40 drehbar angeordnet (siehe Figur 5). Die erste Exzenterhubvorrichtung 40 wird von einem Antrieb (nicht gezeigt), bevorzugt einem Elektromotor, angetrieben. Durch zwei Antriebsriemen 57 werden zwei Hubwellen 52 angetrieben. Ein Drehmoment wird von einem Antriebsritzel 54 aufgenommen und auf die Hubwellen 52 übertragen. Die Hubwellen 52 sind mit elastischen Kupplungen 51 gekoppelt und übertragen das Drehmoment auf ein Planetengetriebe 53. Das Planetengetriebe 53 treibt eine Exzenterscheibe 58 an. Hierbei werden vier identische Exzenterscheiben 58 simultan angetrieben. Sobald sich die Exzenterscheibe 58 dreht, wird die Hubvorrichtung 50 seitlich bewegt und angehoben oder abgesenkt. Die Querverstrebungen 59 sind derart ausgelegt, dass sie einen möglichst kleinen Einbauraum beanspruchen. Die Querverstrebungen 59 sind mit den Lastradauflagen 101 verbunden. Die Lastauflagen 101 verfügen über die Lastradfläche 102 auf der Oberseite des Profils. Diese Lastradfläche 102 bildet eine Fahrbahn für die Übergabeeinheit 30. Die Lastradauflagen 101 sind so angeordnet, dass sie ein möglichst hohes Biegewiderstandsmoment erreichen. Bevorzugt ist die Lastradfläche 102 mit einer Beschichtung (nicht gezeigt) versehen, um möglichst vorteilhafte Reibungsbedingungen für die Laufrollen 38 (siehe Figur 3) zu erreichen. Der Antrieb der ersten Exzenterhubvorrichtung 40 ist bevorzugt mit der Steuerung 3 derart verbunden, dass Informationen ausgetauscht werden können. Für eine Verlegung einer Elektronik ist ein Kabelkanal 55 an der Hubvorrichtung 50 angeordnet. Der Kabelkanal 55 ist bevorzugt blechförmig und durch ein Laser- und Biegeverfahren hergestellt.

In der Figur 5 werden Details des Grundgerüsts 100 gezeigt. Die Grundplatte 103 ist auf der einen Seite mit verschiedenen Abrundungen ausgebildet. Zum Führen und Positionieren der Paletten sind Seitenschranken 104 angeordnet. Die Seitenschranken 104 sind an Schrankenhaltern 105 angeordnet. Die Schrankenhalter 105 sind bevorzugt blechförmig mit einem Laser- und Biegeverfahren hergestellt. Die Seitenschranken 104 sind derart mit Radien ausgebildet, dass die Träger oder Behälter beim Übergeben mittig zentriert werden. Im Zentrum der Grundplatte 103 ist eine Motorhalterung 81 derart gelagert, dass eine Drehung eines Motors um eine Achse senkrecht zur Grundplatte 103 ist. Die Motorhalterung 81 ist aus einem Material hergestellt, welches schwingungsaufnahme- und dämpfungsfähig ist. Die Verbindung von der Motorhalterung 81 zur Grundplatte 103 wird bevorzugt mit einen Wälzlager realisiert. An der Motorhalterung 81 ist der Elektromotor 74 befestigt. Dieser Elektromotor 74 treibt durch ein Antriebsritzel (nicht gezeigt) einen ersten Riemen 78 (siehe Figur 6) an. Der Riemen 78 ist bevorzugt ein Zahnriemen. Der Riemen 78 wird durch zwei Umlenkrollen 85 umgelenkt, damit ein möglichst grosser Umschlingungswinkel um das Antriebsritzel (nicht gezeigt) erreicht wird. Der Elektromotor 74 treibt die Antriebsanordnung 70 an, welche die Übergabeeinheit 30 bewegt.

Die Figur 6 zeigt eine detaillierte Ansicht der Kardan-Kupplung 72 und der Antriebanordnung 70. Des Weiteren ist der Elektromotor 74, wie vorstehend beschrieben, gezeigt. Die Antriebsanordnung 70 ist mit drei Riemen 78, 79, 80 aufgebaut. Die Riemen 78, 79, 80 sind bevorzugt Zahnriemen. Der Elektromotor 74 treibt den ersten Riemen 78 an. Die Riemen 78, 79, 80 sind derart miteinander verbunden, dass sie ein teleskopisches Riemensystem 71 bilden. Das Riemensystem 71 ist durch die Mehrzahl der Zahnriemen 78, 79, 80 aus- und einfahrbar. Die Riemen 78, 79, 80 sind mit Blechwerkstücken (Schlitten 82 und 83) ineinandergreifend und geführt. Bevorzugt sind die Schlitten 82 und 83 an den Laufflächen derart beschichtet, dass eine vorteilhafte Reibungsbedingung zwischen den Reibflächen besteht. An den Zahnriemen 78, 79, 80 sind Mitnehmer 76 und 77 angeordnet. Sobald der erste Zahnriemen 78 in Bewegung gerät, werden die Schlitten 82 und 83 ausgefahren. Die Schlitten 82 und 83 sind mit den Mitnehmern 76 und 77 verbunden und fahren zeitgleich den Zahnriemen 78 und den Zahnriemen 79 aus. Am dritten Riemen 80 ist die Kardan-Kupplung 72 angeordnet, welche mit der Übergabeeinheit 30 koppelbar ist. Die Koppelung erfolgt, indem ein Deckel 65 der Kardankupplung 72 demontiert wird und ein Schaft 61 in eine zylindrische Aufnahme 60 (Siehe Figur 3) eingeführt wird. Hierbei ist die Kupplungsplatte 35 (siehe Figur 3) derart bewegbar, dass ein Ein- und Ausführen des Schafts 61 erlaubt sind. Um die Kupplung zu sichern, wird der Deckel 65 im eingeführten Zustand mit dem Schaft 61 verbunden. Dadurch, dass der Deckel 65 einen grösseren Durchmesser als der Schaft 61 aufweist, wird ein Anschlag gebildet. Bevorzugt herrscht zwischen dem zylindrischen Schaft 61 und der zylindrischen Aufnahme 60 eine Spielpassung. Durch die Spielpassung ist eine Bewegung zwischen dem Schaft 61 und der zylindrischen Aufnahme 60 möglich.

Um beim Verschieben der Übergabeeinheit 30 eine kontinuierliche Kraftübertragung zwischen Antriebsanordnung 70 und der Übergabeeinheit 30 zu gewähren, wird die Kardan-Kupplung 72 eingesetzt. Die Kardan-Kupplung 72 verfügt unter anderem über zwei Rotationsfreiheitsgrade in Drehrichtung 63 und in Drehrichtung 64.

## Patentansprüche

1. Übergabesystem (1) zur Übergabe von Trägern oder Behältern (34), mit wenigstens einem Transportfahrzeug (10) und wenigstens einem Aufnahmeplatz (90)
- wobei das Transportfahrzeug (10) in einer ersten Fahrtrichtung (21) verfahrbar ist und eine Übergabestelle (31) umfasst, an der der Träger oder Behälter (34) anordenbar ist
- wobei der Aufnahmeplatz (90) eine Aufnahmestelle (91) umfasst, auf welche der Träger oder Behälter (34) übergebbar ist
- und wobei das Transportfahrzeug (10) eine Übergabeeinheit (30) umfasst, welche ein Fahrwerk (29) aufweist und in einer Querrichtung (20) quer zur Fahrtrichtung (21) des Transportfahrzeug (10) auf einer Fahrbahn (5) auf dem Transportfahrzeug (10) und dem Aufnahmeplatz (90) verfahrbar ist, sodass Träger oder Behälter (34) mit der Übergabeeinheit (30) von der Aufnahmestelle (91) zu der Übergabestelle (31) oder zurück bewegbar sind,
wobei, das Transportfahrzeug (10) eine Antriebsanordnung (70) für die Übergabeeinheit (30) aufweist und die Übergabeeinheit (30) mit der Antriebsanordnung (70) derart gekoppelt ist, dass sie mittels der Antriebsanordnung (70) in Querrichtung (20) bewegbar ist.

2. Übergabesystem (1) nach Anspruch 1, wobei die Übergabeeinheit (30) mit der Antriebsanordnung (70) derart gekoppelt ist, dass die Übergabeeinheit (30) vertikal und/oder lateral zur Querrichtung (20) beweglich ist.

3. Übergabesystem (1) nach einem der vorherigen Ansprüche, wobei das Fahrwerk (29) mindestens drei Räder (38) aufweist.

4. Übergabesystem (1) nach einem der vorherigen Ansprüche, wobei die Übergabeeinheit (30) antriebslos ausgebildet ist.

5. Übergabesystem (1) nach einem der vorherigen Ansprüche, wobei die Antriebsanordnung (70) ein Ketten- oder Riemensystem (71) aufweist, welches mit der Übergabeeinheit (30) gekoppelt oder koppelbar ist, bevorzugt ein teleskopisches Zahnriemensystem (71).

6. Übergabesystem (1) nach einem der vorherigen Ansprüche, wobei das Riemensystem (71) in einer Ausfahrrichtung (20) bis zur Aufnahmestelle (91) ausfahrbar ist.

7. Übergabesystem (1) nach einem der vorherigen Ansprüche, wobei das Riemensystem (71) und die Übergabeeinheit (30) mechanisch oder elektrisch kuppelbar ist.

8. Übergabesystem (1) nach einem der vorherigen Ansprüche, wobei die Übergabestelle (31) eine erste Hubvorrichtung (40), insbesondere eine erste Exzenterhubvorrichtung (40) umfasst, mit welcher eine Höhe der Hubgerüst (50) einstellbar ist.

9. Übergabestystem (1) nach einem der vorherigen Ansprüche, wobei die Übergabeeinheit (30) eine zweite Hubvorrichtung (32) umfasst, insbesondere eine zweite Exzenterhubvorrichtung (32), mit welcher ein Hubblech (2) aufheb- und absenkbar ist, damit Träger oder Behälter (34) mit der zweiten Exzenterhubvorrichtung (32) aufnehm- und absenkbar sind.

10. Übergabesystem (1) nach Anspruch 8, wobei das System (1) eine Steuerung (3) ausweist, die derart ausgebildet ist, dass eine seitliche Bewegung, welche durch die erste und/oder zweite Exzenterhubvorrichtung (32, 40) verursacht wird, durch Bewegung der Übergabeeinheit (30) in Querrichtung (20) kompensierbar ist.

11. Übergabesystem (1) nach einem der vorherigen Ansprüche, wobei die Übergabeeinheit (30) mit einem Kardangelenk (73) mit der Antriebsanordnung (70) gekoppelt ist.

12. Übergabesystem (1) nach einem der vorherigen Ansprüche, wobei der Aufnahmeplatz (90) unbeweglich angeordnet ist.

13. Übergabesystem (1) nach einem der vorherigen Ansprüche 8 bis 11, wobei das System (1) mindestens einen Sensor aufweist, mittels welchem ein Höhenunterschied zwischen der Aufnahmestelle (91) und der Übergabestelle (31) ermittelbar ist und wobei das System (1) eine Steuereinheit (3) aufweist, mittels welcher die Exzenterhubvorrichtungen (32, 40) derart betätigbar sind, dass der Höhenunterschied ausgleichbar ist.

14. Verfahren zur Übergabe von Trägern oder Behältern (37) enthaltend die Schritte
a.Ausgleichen eines Höhenunterschieds zwischen Übergabestelle (31) und Aufnahmestelle (91), bevorzugt nach einem der vorherigen Ansprüche,
b. Übergeben von Trägern oder Behältern (34), bevorzugt mit einer Übergabeeinheit (30) gemäss einem der vorherigen Ansprüche, von der Aufnahmestelle (91) zu der Übergabestelle (31) oder zurück, wobei die Übergabeeinheit 30 derart gestützt wird, dass kein Drehmoment durch das Gewicht der Übergabeeinheit 30 mit Träger oder Behälter bei der Übergabe an der Übergabestelle 31 hervorgerufen wird,
c. Übergeben von Trägern oder Behältern (34), mit einem Riemensystem (71), bevorzugt einem Riemensystem (71) nach einem der vorherigen Ansprüche, wobei die Übergabeeinheit (30) mit der Antriebsanordnung (70) derart gekoppelt ist, dass sie mittels der Antriebsanordnung (70) in Querrichtung(20) bewegbar ist.
